# EUROPÄISCHE PATENTSCHRIFT

(11) **EP 3 423 254 B1**
(45) Veröffentlichungstag und Bekanntmachung des Hinweises auf die Patenterteilung: **06.01.2021**
(21) Anmeldenummer: 17716127.0
(22) Anmeldetag: 07.04.2017
(51) Int. Cl.: B29C 49/12, B29C 49/42, B29C 49/64

(54) **HEIZVORRICHTUNG UND VERFAHREN ZUR THERMISCHEN KONDITIONIERUNG VON FÜR DIE BLASFORMUNG VORGESEHENEN VORFORMLINGEN**
HEATING DEVICE AND METHOD FOR THE THERMAL CONDITIONING OF PREFORMS PROVIDED FOR BLOW MOULDING
DISPOSITIF DE CHAUFFAGE ET PROCÉDÉ POUR LE CONDITIONNEMENT THERMIQUE DE PRÉFORMES DESTINÉES AU MOULAGE PAR SOUFFLAGE

(30) Priorität: 14.04.2016 DE 102016004405
(43) Veröffentlichungstag der Anmeldung: 09.01.2019
(73) Patentinhaber: KHS Corpoplast GmbH, 22145 Hamburg (DE)
(72) Erfinder: KLATT, Dieter, 22147 Hamburg (DE); BAUMGARTE, Rolf, 22926 Ahrensburg (DE); MEYER, Jan Fabian, 22337 Hamburg (DE); LEWIN, Frank, 22889 Tangstedt (DE)
(74) Vertreter: Meissner Bolte Partnerschaft mbB
(86) Internationale Anmeldenummer: PCT/EP2017/000439
(87) Internationale Veröffentlichungsnummer: WO 2017/178102

(56) Entgegenhaltungen:
- EP-A1- 2 848 382
- WO-A1-2010/007159
- DE-U1- 29 916 842
- US-A- 5 853 775

## Beschreibung

Die Erfindung betrifft eine Heizvorrichtung zur thermischen Konditionierung von für die Blasformung vorgesehenen Vorformlingen nach dem Oberbegriff des Anspruchs 1 und eine Blasmaschine nach Anspruch 13.

Die Erfindung betrifft weiterhin ein Verfahren zur inhomogenen Temperierung von Vorformlingen nach dem Oberbegriff von Anspruch 14.

Generell geht es um das Gebiet des Preferential Heating, also um die ungleichmäßige Temperierung von Vorformlingen in deren Umfangsrichtung. Eine derartige ungleichmäßige Temperierung mit stärker erwärmten Umfangsbereichen und mit weniger stark erwärmten Umfangsbereichen wird beispielsweise angewendet, wenn aus den Vorformlingen Behälter hergestellt werden sollen, deren Querschnitt von einer kreisrunden Form abweicht. Die Abweichung kann beispielsweise darin bestehen, dass Behälter mit ovalem Querschnitt oder beispielsweise mit dreieckigem oder viereckigem Querschnitt produziert werden sollen.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizvorrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE 43 40 291 A erläutert.

Der grundsätzliche Aufbau einer Blasstation zur Behälterformung wird in der DE 42 12 583 A1 beschrieben. Möglichkeiten zur Temperierung der Vorformlinge werden in der DE 23 52 926 A1 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE 199 06 438 A1 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Herstellung der eingangs erwähnten unrunden Behälter wird bereits in der US 3,775,524 beschrieben. Es erfolgt zunächst eine symmetrische Temperierung der Vorformlinge, anschließend wird die Temperatur in ausgewählten Bereichen selektiv erhöht. Weitere Varianten zur Herstellung von Temperaturprofilierungen in Umfangsrichtung des Vorformlings werden ebenfalls in der US 3,632,713, der US 3,950,459 sowie der US 3,892,830 beschrieben. Eine Temperaturkonditionierung durch selektive Abschattung wird in der DE 33 14 106 A1 angegeben.

Aus der US 5,292,243 ist es bekannt, gleichzeitig zwei Vorformlinge einer Temperaturkonditionierung in Umfangsrichtung zu unterziehen. In der EP 0 620 099 B1 und der inhaltsgleichen DE 694 01 024 T2 findet sich eine Zusammenstellung von aus dem Stand der Technik bekannten Verfahren zur Temperaturkonditionierung von Vorformlingen.

Weiterhin ist im Stand der Technik bekannt, einen Vorformling zunächst in einem ersten Heizungsabschnitt einer Heizvorrichtung in Umfangsrichtung homogen, das heißt gleichmäßig zu erwärmen, und anschließend in einem zweiten Heizungsabschnitt in Umfangsrichtung das gewünschte Temperaturprofil zu erzeugen. Einen solchen Stand der Technik zeigt die WO 97/32713 mit einem schrittweise arbeitenden Rotationsantrieb für die Vorformlinge. Die US 5,853,775 offenbart zwei Heizungsabschnitte mit einer ebenfalls schrittweise umlaufenden Transportkette mit einer Vielzahl von Vorformlingen tragenden Kettengliedern in Form von Transportdornen. In einer ersten Heizstation erfolgt zunächst eine homogene Erwärmung der Vorformlinge und in einer der ersten Station gegenüberliegenden zweiten Heizstation erfolgt eine in Umfangsrichtung ungleichmäßige Erwärmung der Vorformlinge. In beiden Heizstationen werden die Vorformlinge mittels einer nur der jeweiligen Heizstation zugeordneten Kette gedreht.

Die DE 10 2007 016 027 A1 lehrt eine Vorrichtung für das Preferential Heating, bei der eine Drehbewegung der Vorformlinge von einem Profilstrang erzeugt wird, der mit einem Zahnrad des Transportmittels zusammenwirkt, das den Vorformling durch die Heizstrecke trägt und das gemeinsam mit weiteren Transportmitteln zu einer umlaufenden Transportkette verbunden ist. Der Profilstrang läuft beabstandet von der Transportkette um die Heizstrecke um und kämmt mit dem Zahnrad des Transportmittels. Dabei wird der Profilstrang mit konstanter oder variierender Umlaufgeschwindigkeit angetrieben.

Die bisher im Stand der Technik zur Verfügung stehenden Verfahren und Vorrichtungen erweisen sich teilweise als kompliziert im Aufbau, als wenig flexibel einsetzbar und als umbauintensiv, falls von der ungleichmäßigen Temperierung von Vorformlingen wieder auf eine gleichmäßige Temperierung von Vorformlingen umzustellen ist, z.B. bei einem Wechsel in der Produktion.

Aufgabe der vorliegenden Erfindung ist es daher, ein verbessertes Verfahren der einleitend genannten Art anzugeben, das in einfacher Weise die konstruktive Möglichkeit für das Preferential Heating eröffnet und dabei flexibel einsetzbar ist.

Diese Aufgabe wird durch ein Verfahren gelöst, bei dem die Temperierung in einer Heizvorrichtung erfolgt, die mehrere entlang einer Heizstrecke hintereinander angeordnete Heizeinrichtungen aufweist, wobei Transportmittel die Vorformlinge auf einem Transportweg entlang der Heizstrecke und entlang der Heizeinrichtungen führen. Die Transportmittel werden kettenartig zu einer geschlossen umlaufenden Transportkette verbunden. Es kann sich dabei um ein Heizrad handeln oder um eine von Umlenkrädern in einer beliebigen Grundkontur geführte Kette. Das Transportmittel kann z.B. ein Transportdorn sein, insbesondere ein in den Mündungsbereich des Vorformlings innenseitig klemmend eingreifender Transportdorn, von dem ein Vorformling hängend gehalten ist. Das Transportmittel läuft in der Heizvorrichtung um und übernimmt die Vorformlinge während eines Umlaufes, haltert sie auf einem Transportweg und gibt die temperierten Vorformlinge wieder ab. Es sind aber auch Transportmittel bekannt, die mit in die Blasstation laufen. In einem ersten Heizabschnitt der Heizvorrichtung werden die Vorformlinge einer gleichmäßigen Temperierung in deren Umfangsrichtung unterzogen unter Drehung der Vorformlinge um deren Längsachse. In einem zweiten Heizabschnitt der Heizvorrichtung erfolgt eine ungleichmäßige Temperierung der Vorformlinge in deren Umfangsrichtung (Preferential Heating). An den Transportmitteln ist ein Drehantriebskörper angeordnet, z.B. ein Zahnrad, an den eine beabstandet zur Transportkette umlaufend angeordnete und angetriebene erste Eingriffseinrichtung angreift, z.B. ein Dorndrehriemen, zur Einbringung einer Eigenrotationsbewegung um eine Längsachse des Transportmittels, wobei diese erste Eingriffseinrichtung im Bereich des ersten Heizabschnittes in Eingriff mit dem Drehantriebskörper gebracht wird und im Bereich des zweiten Heizabschnittes außer Eingriff mit dem Drehantriebskörper gebracht wird. Erfindungsgemäß wird eine zweite Eingriffseinrichtung beabstandet zur Transportkette antreibbar umlaufend angeordnet, die z.B. in gleicher Art wie die erste Eingriffseinrichtung ausgeführt sein kann, z.B. ebenfalls als ein Dorndrehriemen. Diese zweite Eingriffseinrichtung wird im Bereich des zweiten Heizabschnittes in Eingriff mit dem Drehantriebskörper gebracht und hält den Drehantriebskörper drehfest, insbesondere indem sie auf eine gleiche Translationsgeschwindigkeit wie die Transportkette gehalten wird.

Mit Vorteil dreht die zweite Eingriffseinrichtung nach einem Halten des Eingriffskörpers und vor der Aufhebung des Eingriffs in den Eingriffskörper den Vorformling um einen vorgegebenen Winkel um dessen Längsachse, wobei dieser Winkel insbesondere einstellbar ist. Dies kann erforderlich sein, um den ungleichmäßig temperierten Vorformling in einer gewünschten Drehpositionierung in die Blasstation zu übergeben.

Weitere vorteilhafte Ausgestaltungen der Erfindung sind in den nachfolgenden Vorrichtungsansprüchen angegeben, deren Merkmale in verfahrensmäßiger Umsetzung in analoger Weise bei dem beschriebenen Verfahren einsetzbar sind, und ergeben sich aus der detaillierten Beschreibung zu den Figuren.

Eine weitere Aufgabe der vorliegenden Erfindung ist es, verbesserte Heizvorrichtungen der einleitend genannten Art anzugeben, die in einfacher Weise die Möglichkeit für das Preferential Heating eröffnen und dabei flexibel einsetzbar sind.

Diese Aufgabe wird erfindungsgemäß durch Heizvorrichtungen zur thermischen Konditionierung von aus einem thermoplastischen Material bestehenden Vorformlingen auf ein für eine Blasformung geeignetes Temperaturprofil gelöst, wobei die Heizvorrichtung mehrere entlang einer Heizstrecke hintereinander angeordnete Heizeinrichtungen aufweist. Die Heizvorrichtung weist mehrere Transportmittel auf zum Transport der Vorformlinge auf einem Transportweg entlang der Heizstrecke und entlang der Heizeinrichtungen. Die Transportmittel sind kettenartig zu einer geschlossen umlaufenden Transportkette verbunden. Die Kette kann auch als ein Heizrad ausgeführt sein, im Regelfall ist die Kette aber über Umlenkräder geführt und spannt eine beliebige Grundkontur auf. Ein typisches Transportmittel stellt ein Transportdorn dar, insbesondere ein in den Mündungsabschnitt eines Vorformlings klemmend eingreifender Klemmdorn, an dem der Vorformling hängend gehalten ist. Die Transportmittel sind zur Übernahme, zum Halten und zur Abgabe der Vorformlinge während eines Kettenumlaufs ausgebildet, wobei auch möglich ist, dass das Transportmittel mit in die Blasstation läuft. Die Transportmittel weisen einen Drehantriebskörper auf, z.B. ein Zahnrad, der mit einer beabstandet zur Transportkette umlaufend angeordneten und angetriebenen ersten Eingriffseinrichtung, z.B. einem Dorndrehriemen, zusammenwirkt zur Einbringung einer Eigenrotationsbewegung um eine Längsachse des Transportmittels durch Eingriff in den Drehantriebskörper. Die Heizvorrichtung hat einen ersten Heizabschnitt mit ersten Heizeinrichtungen, typischerweise handelt es sich dabei um sogenannte Heizkästen mit auf einer Seite des Transportweges angeordneten Heizelementen bzw. Heizstrahlern, denen gegenüberliegend auf der anderen Seite des Transportweges Reflektoren angeordnet sind, wobei die Vorformlinge durch den Zwischenbereich geführt werden. In diesem ersten Heizabschnitt erfolgt eine gleichmäßige Temperierung der Vorformlinge in deren Umfangsrichtung. Die Heizvorrichtung hat einen zweiten Heizabschnitt mit zweiten Heizeinrichtungen, bei denen es sich typischerweise um Heizkästen mit auf beiden Seiten sich gegenüberliegend angeordneten Heizelementen bzw. Heizstrahlern handeln kann, in deren Mitte die Vorformlinge hindurchgeführt werden. In diesem zweiten Heizabschnitt erfolgt eine ungleichmäßige Temperierung der Vorformlinge in deren Umfangsrichtung (Preferential Heating), wobei die erste Eingriffseinrichtung so angeordnet ist, dass sie im Bereich des ersten Heizabschnittes in Eingriff mit dem Drehantriebskörper ist und im Bereich des zweiten Abschnittes außer Eingriff mit dem Drehantriebskörper ist. Im ersten Heizabschnitt werden die Vorformlinge für die Vergleichmäßigung der Beheizung in Eigenrotation versetzt, insbesondere in eine kontinuierliche. Erfindungsgemäß weist die Heizvorrichtung eine zweite, beabstandet zur Transportkette umlaufend angeordnete und angetriebene Eingriffseinrichtung auf, z.B. einen zweiten Dorndrehriemen. Diese zweite Eingriffseinrichtung ist so angeordnet, dass sie im Bereich des zweiten Heizabschnittes in Eingriff mit dem Drehantriebskörper ist und dabei die Translationsgeschwindigkeit der Transportkette aufweist.

Mit den erfindungsgemäßen Lösungen wird erreicht, dass das Verfahren und die Vorrichtung z.B. durch Umschalten der Geschwindigkeit der zweiten Eingriffseinrichtung von Preferential Heating auf eine gleichmäßige Temperierung gleichermaßen für beide Temperierungsmodi einsetzbar ist. Weiterhin ergeben sich Vorteile im Aufbau und die Möglichkeit, den Vorformling vor der Übergabe in die Blasstation noch um einen vorbestimmten Umfangswinkel zu positionieren.

Weitere vorteilhafte Ausgestaltungen der Erfindung sind in den Unteransprüchen angegeben oder ergeben sich aus den Figuren in Verbindung mit der Figurenbeschreibung.

Es ist möglich, die zweite Eingriffseinrichtung mit einem eigenen Antrieb zu versehen. Es ergibt sich dadurch eine hohe Flexibilität bei der Einstellung der Umlaufgeschwindigkeit. Es ist dann allerdings in der Regel eine Synchronisierung mit der Bewegung der Transportkette erforderlich. Letzteres ist entbehrlich, wenn der Antrieb für die Eingriffseinrichtung von der Transportkette abgegriffen wird. Dazu kann die zweite Eingriffseinrichtung mit Vorteil z.B. wenigstens ein Koppelelement aufweisen, das zur Bewegungskopplung in koppelnden Eingriff mit den Transportmitteln verfahrbar ist, insbesondere kurvengesteuert verfahrbar ist. Ein solches Koppelelement könnte auch als Mitnehmer bezeichnet werden. Insbesondere kann z.B. in jedes Kettenglied der Transportkette ein zugeordneter Mitnehmer eingreifen, insbesondere wenn die Eingriffseinrichtung ebenfalls als Kette ausgeführt ist.

Ein bevorzugtes Transportmittel stellen Transportdorne dar, insbesondere solche, die als in den Mündungsabschnitt der Vorformlinge einführbare Klemmdorne ausgebildet sind. Diese Transport- bzw.- Klemmdorne stellen keine Behinderung für die Temperierung dar und erleichtern Übergabevorgänge.

Obwohl die Drehantriebskörper beliebig ausgeführt werden können erweisen sich Zahnräder als bevorzugt, da ein rutschfestes und verschleißarmes Eingreifen erfolgen kann, z.B. wenn die erste Eingriffseinrichtung als Zahnriemen ausgeführt ist.

Eine einfache Konstruktion einer Transportkette weist voneinander beabstandet angeordnete Umlenkräder auf, über die die Kette geführt ist. Bevorzugt erfolgt die Führung so, dass gekrümmte Umlaufabschnitte im Bereich der Umlenkräder und lineare Umlaufabschnitte in den dazwischenliegenden Bereichen entstehen. Dies hat den Vorteil, dass die Heizeinrichtungen in den linearen Umlaufabschnitten angeordnet werden können, wo einfache Bewegungsmuster vorliegen und/oder ein den Transportdorn zu Eigenrotation antreibender oder ein den Transportdorn festhaltender Eingriff am Transportdorn bzw. generell am Transportmittel leicht realisierbar ist.

Einfache konstruktive Verhältnisse liegen dann vor, wenn die zweite Eingriffseinrichtung als Zahnriemen ausgebildet ist. Dies erweist sich auch unter dem Aspekt der zu bewegenden Massen als bevorzugte Ausführungsform. Insbesondere ist bevorzugt, diese zweite Eingriffseinrichtung in einem linearen Umlaufabschnitt anzuordnen. Wie oben erläutert liegen hier leicht beherrschbare Bewegungsmuster vor.

Für ein möglicherweise gewünschtes Drehen des Vorformlings in eine gewünschte Umfangspositionierung erweist es sich als vorteilhaft, dass der die zweite Eingriffseinrichtung ausbildende Zahnriemen über einen Teilumfang entlang eines Umlenkrades der Transportkette und dabei in Eingriff mit dem Drehantriebskörper stehend von einem Führelement geführt ist. In diesem Teilumfang laufen die Transportkette und die zweite Eingriffseinrichtung aufgrund ihrer verschiedenen Umlaufradien bei unterschiedlichen Winkelgeschwindigkeiten, was für eine gezielte Vorformlingsdrehung ausnutzbar ist. Besonders bevorzugt ist dabei, dass das Führelement verschieblich ausgeführt ist. Es ist dabei z.B. daran gedacht, das Führelement den genannten überstrichenen Teilumfang, in dem noch Eingriff besteht, vergrößernd oder verkleinernd zu verschieben, um die damit erreichte Vorformlingsdrehung einzustellen.

Für eine hohe Genauigkeit der Bewegungen und für eine Steuerbarkeit ist es bevorzugt, dass der Eingriff der zweiten Eingriffseinrichtung kurvengesteuert ausgeführt ist.

Aus allen verfügbaren Ausführungsvarianten einer Eingriffseinrichtung erweist es sich für eine langzeitstabile Verwendbarkeit bei geringem Gewicht und guter Handhabbarkeit als vorteilhaft, die zweite Eingriffseinrichtung z.B. als eine umlaufende Eingriffskette auszuführen mit mehreren aneinandergereihten Kettengliedern. Dabei weist bevorzugt jedes Kettenglied einen mit einem Drehantriebskörper in eine Eingriffsposition verfahrbaren Eingriffskörper auf, insbesondere einen kurvengesteuert verfahrbaren Eingriffskörper, und/oder ein Koppelelement bzw. Mitnehmer wie weiter oben erläutert.

Zur Bereitstellung eines Raumes für das Wegführen der ersten Eingriffseinrichtung von der Transportkette erweist es sich als bevorzugt, die Eingriffskette aus zwei in vertikaler Richtung zueinander beabstandet angeordneten Ketteneinheiten auszubilden. Diese Ketteneinheiten sind mit Vorteil bewegungsgekoppelt ausgeführt, und zwischen ihnen wird die erste Eingriffseinrichtung weg von der Transportkette geführt
Eine weitere bevorzugte Ausführungsform einer Eingriffseinrichtung ist dadurch realisierbar, dass der Eingriffskörper als verfahrbarer Schwenkhebel mit Innenverzahnung ausgebildet ist. Dieser Schwenkhebel könnte z.B. direkt auf den Drehantriebskörper des Transportmittels angreifen. Bevorzugt treibt dieser Schwenkhebel aber eine mit dem Eingriffskörper kämmende Riemenscheibe an, die mit dem Drehantriebskörper in kämmenden Eingriff bringbar ist. Weiter bevorzugt ist die Riemenscheibe als Teilsegment einer Scheibe, also als Scheibensegment ausgeführt. Um die Riemenscheibe nicht direkt mit dem Schwenkhebel antreiben zu müssen ist es bevorzugt, dass dies über ein von dem Schwenkhebel angetriebenes Ritzel erfolgt, das insbesondere auf einer gemeinsamen Welle mit der Riemenscheibe angeordnet ist. Es kann auf diese Weise auch ein Übersetzungsverhältnis realisiert werden.

Die vorstehend beschriebene Heizvorrichtung kann insbesondere in einer Blasmaschine Verwendung finden. Der Begriff der Blasmaschine meint auch solche Maschinen, in denen ein Recken der Vorformlinge z.B. mit einer Reckstange während der Einleitung von Blasgas oder von einem anderen Blasmedium zur blasformenden Umwandlung erfolgt.

In Verbindung mit den nachfolgenden Figuren soll die Erfindung näher erläutert werden anhand von Ausführungsbeispielen. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine Skizze zu einem ersten Ausführungsbeispiel der vorliegenden Erfindung in einer Aufsicht,
- Fig. 5: eine Seitenansicht zu einem zweiten Ausführungsbeispiel der Erfindung,
- Fig. 6a, 6b: vergrößerte Ansichten zu dem Ausführungsbeispiel der Figur 5 im Eingriffsbereich der zweiten Eingriffseinrichtung in die Transportkette,
- Fig. 7: eine Detailansicht aus Figur 4 im Bereich des Kopfrades,
- Fig. 8: perspektivische Ansichten zu Details aus Figur 7 im Bereich des zweiten Heizabschnittes, und
- Fig. 9: Schnittansichten von oben zum Gegenstand in der linken Bildhälfte von Fig. 8.

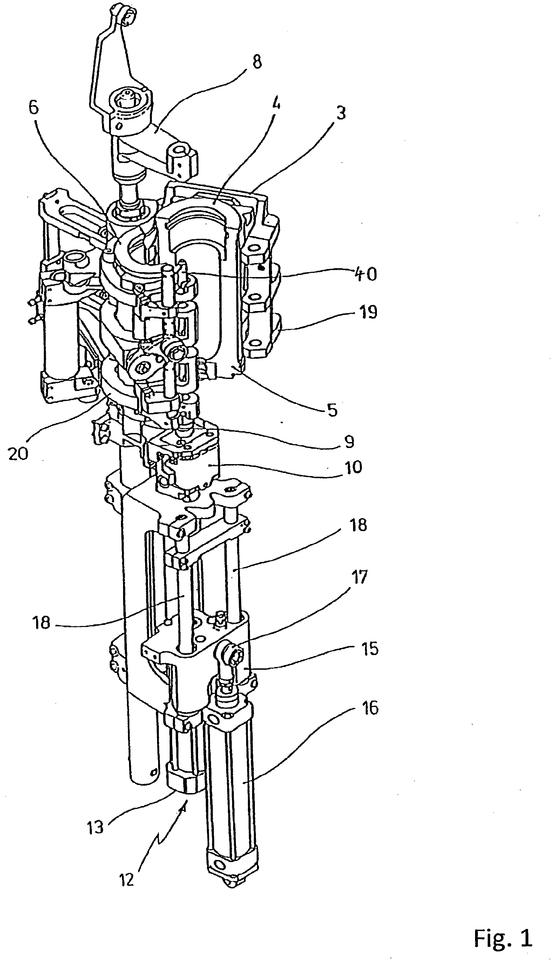

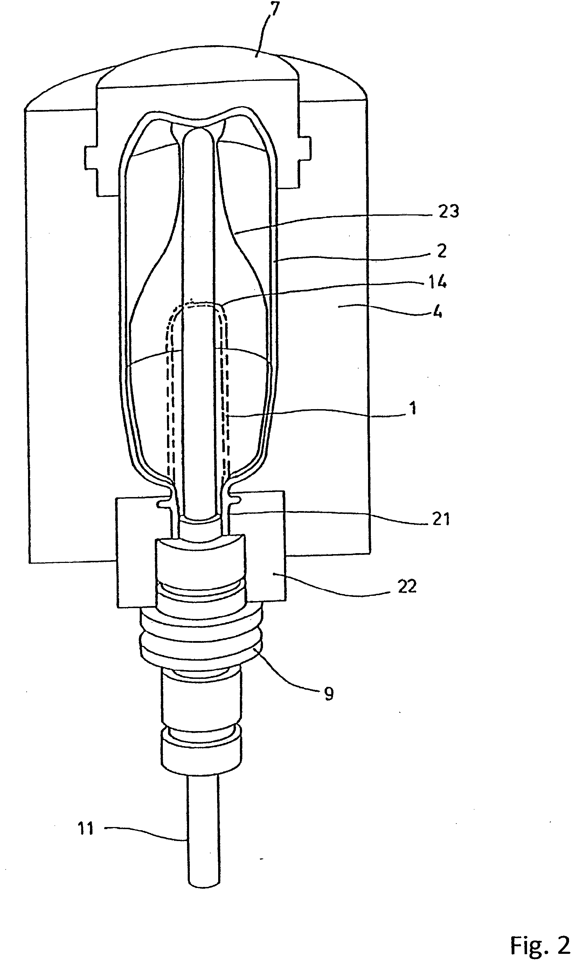

Der prinzipielle Aufbau einer Vorrichtung zur Umformung von Vorformlingen (1) in Behälter (2) ist in den Fig. 1 und 2 dargestellt. Anhand dieser Figuren soll lediglich in grundsätzlicher Art der Prozess der Blasformung von Behältern (2) aus Vorformlingen (1) erläutert werden.

Die dargestellte Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat (PET) sein. Zur Ermöglichung eines Einsetzens des Vorformlings (1) in die Blasform (4) und zur Ermöglichung eines Herausnehmens des fertigen Behälters (2) besteht die Blasform (4) typischerweise aus Formhälften (5, 6) und aus einem Bodenteil (7), das von einer Hubvorrichtung (8) positionierbar ist, nämlich im vorliegenden Beispiel absenk- und anhebbar. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen. Im gezeigten Beispiel erfolgt die Blasformung von mit Mündung nach unten weisend eingesetzten Vorformlingen. Ebenso üblich sind Blasstationen, in die Vorformlinge mit nach oben gerichteter Mündung eingesetzt werden.

Zur Ermöglichung einer Druckluftzuleitung ist unterhalb des Transportdornes (9) ein Anschlusskolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Im Stand der Technik auch bekannt sind Reckstangen mit linearmotorischem Antrieb.

Bei der in Fig. 1 dargestellten Ausführungsform ist das Recksystem derart ausgebildet, dass eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

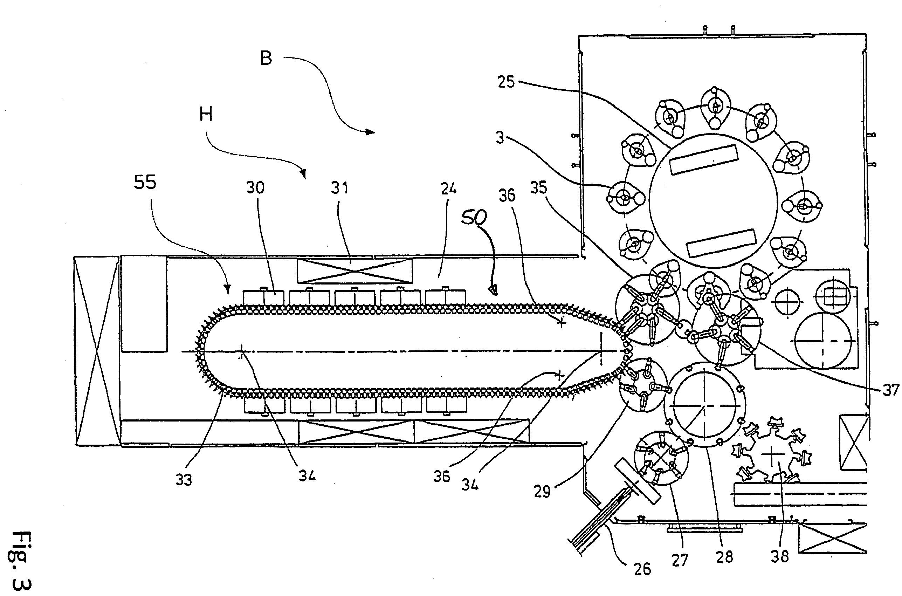

Fig. 3 zeigt zum allgemeinen Verständnis des technischen Umfeldes der Erfindung den grundsätzlichen Aufbau einer Blasmaschine (B), die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die z.B. wie zu den Figuren 1 und 2 erläutert ausgebildeten Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34), das Kopfrad, und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34, Kopfrad) im unmittelbaren Übergabebereich zum Übergaberad (29) und zum Eingaberad (35). Alternativ zur Verwendung von kettenartig verbundenen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

Die in Figur 3 dargestellte Heizstrecke (24) kann z.B. durch das Vorsehen einer größeren Anzahl von Heizstrahlern (30) modifiziert werden, um z.B. eine größere Menge von Vorformlingen (1) je Zeiteinheit temperieren zu können. Die Gebläse (31) können z.B. Kühlluft in den Bereich von Kühlluftkanälen einblasen, die zugeordneten Heizstrahlern (30) jeweils gegenüberliegen und über Ausströmöffnungen die Kühlluft abgeben. Durch die Anordnung der Ausströmrichtungen kann eine Strömungsrichtung für die Kühlluft im Wesentlichen quer zu einer Transportrichtung der Vorformlinge (1) realisiert werden. Die Kühlluftkanäle können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Die vorstehend geschilderten Heizstrahler (30) sind ebenfalls lediglich als Beispiele für verwendbare Heizeinrichtungen zu verstehen. Es sind im Stand der Technik eine Vielzahl alternativer Konstruktionen bekannt, z.B. als Heizräder ausgebildete Konstruktionen mit Einzelplatzbeheizung. Es sind im Stand der Technik auch andere Heizverfahren bekannt, z.B. Beheizung der Vorformlinge durch Mikrowellenbestrahlung. Die Erfindung ist unabhängig vom konkreten Aussehen der Heizeinrichtungen und unabhängig vom Heizverfahren.

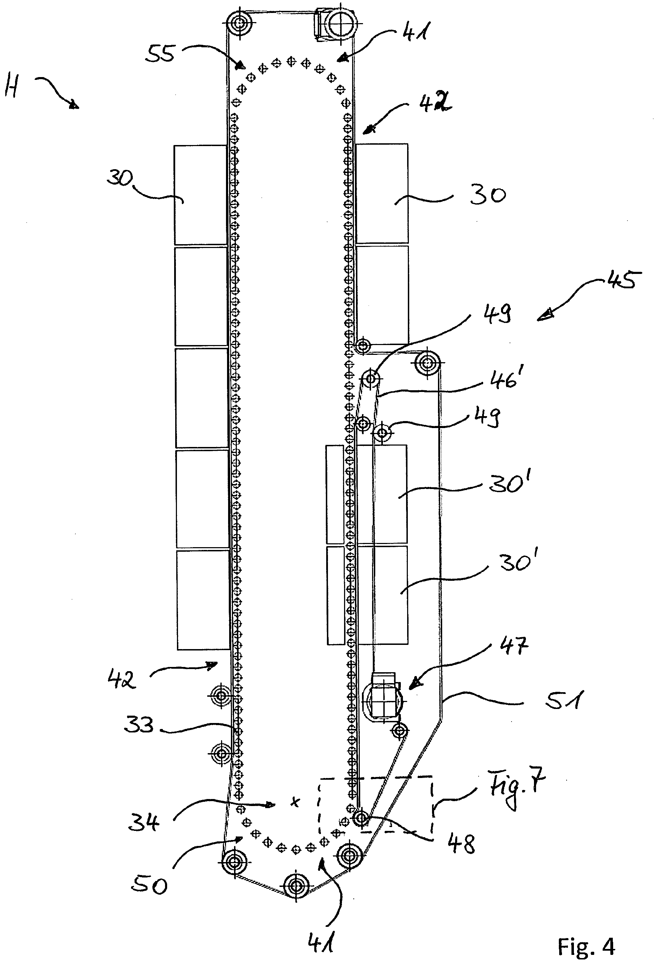

Fig. 4 zeigt in einer Ansicht von oben ähnlich der in Fig. 3 gezeigten Ansicht eine erfindungsgemäße Heizvorrichtung (H). Die aus mehreren Transportmitteln (33) zusammengesetzte umlaufende Transportkette (50) ist durch einzelne Kettenglieder (33) angedeutet. Diese Kette (50) wird über nicht näher dargestellte Umlenkräder umgelenkt und hat im Bereich dieser Umlenkung einen gekrümmten Bereich (41) und dazwischen liegend lineare Bereiche (42). Die Vorformlingseingabe in die Heizvorrichtung (H) erfolgt im Bereich des mit Bezugszeichen (34) angedeuteten Kopfrades. In der Darstellung der Fig. 4 ist dieses Kopfrad (34) am unteren Bildende angeordnet, während in der Darstellung der Fig. 3 das Kopfrad am oberen Ende der Heizvorrichtung (H) angeordnet ist. Fig. 4 zeigt nicht die entsprechendem Übergaberäder zur Übergabe von Vorformlingen in die Heizvorrichtung (H) und zur Entnahme der temperierten Vorformlinge nach einem vollständigen Durchlaufen der Heizvorrichtung (H) über einen fast kompletten Umlaufzyklus der Transportkette (50).

Im in der Fig. 4 linken linearen Bereich (42) sind mehrere Heizeinrichtungen (30) vorgesehen. Typische derartige Heizeinrichtungen (30) sind zum Beispiel als Heizkästen aufgebaut mit darin aufgenommenen Heizstrahlern. In der Regel sind in dieser Heizeinrichtung (30) mehrere, im Wesentlichen horizontal verlaufende, linienförmige, Heizstrahlung emittierende Heizröhren angeordnet, die über die Vorformlingslänge verteilt angeordnet sind. Diese Heizstrahler sind in der Regel auf einer Seite des Heizkastens angeordnet und auf einer gegenüberliegenden Seite des Heizkastens ist in der Regel ein Reflektor angeordnet, der mit einem hohen Reflektionsvermögen für die verwendete Heizstrahlung ausgeführt ist. In den zwischen den Heizstrahlern und dem Reflektor gebildeten Raum werden die Vorformlinge (1) von den Transportmitteln (33) hindurchgeführt. Dabei werden die Vorformlinge (1) kontinuierlich bewegt und kontinuierlich um ihre Längsachse rotiert, um eine möglichst gleichmäßige Beheizung über den Umfang der Vorformlinge (1) zu gewährleisten. In Achsrichtung des Vorformlings (1) kann ebenfalls eine gleichmäßige Temperierung erfolgen. Es ist aber auch möglich, dass bestimmte Höhenbereiche des Vorformlings (1) auf eine höhere oder eine niedrigere Temperatur gebracht werden als andere Höhenbereiche. Fig. 4 zeigt im linken Bildbereich fünf nebeneinander angeordnete Heizkästen, wobei diese Zahl beliebig gewählt werden kann.

Auf dem gegenüberliegenden linearen Bereich (42) der Heizstrecke (24) befinden sich ebenfalls Heizkästen (30, 30'). Die beiden von den Vorformlingen (1) zuerst durchlaufenen Heizkästen (30) auf diesem Teil der Heizstrecke (24) sind baugleich zu den vorab beschriebenen Heizkästen (30) für die gleichmäßige Umfangstemperierung der Vorformlinge (1). Es folgt dann eine Lücke sowie weiter in Richtung der Vorformlingsbewegung zwei für das Preferential Heating benötigte Heizkästen (30'), die sich in ihrem Aufbau von den vorab geschilderten Heizkästen (30) unterscheiden. Auch hier sind typischerweise auf einer ersten Seite des Heizkastens (30') mehrere Heizstrahler angeordnet. Auf der gegenüberliegenden Seite des Heizkastens (30') ist allerdings kein Reflektor angeordnet, sondern weitere Heizstrahler, insbesondere in der gleichen Weise wie auf der ersten Seite. Dadurch ist gewährleistet, dass die durch diese Preferential-Heating-Heizkästen (30') geführten Vorformlinge (1) auf beiden Seiten gleich temperiert werden, wohingegen die in Bewegungsrichtung vorne und hinten liegenden Umfangsbereiche weniger Temperaturstrahlung erfahren. Auf diese Weise kann ein in Umfangsrichtung gewünschtes Temperaturprofil erzeugt werden, nämlich Umfangsbereiche mit höherer Temperatur, nämlich die den Heizstrahlern zugewandten Umfangsbereiche, und Umfangsbereiche mit geringerer Temperatur, nämlich die in Bewegungsrichtung und entgegen der Bewegungsrichtung weisenden Umfangsbereiche des Vorformlings (1).

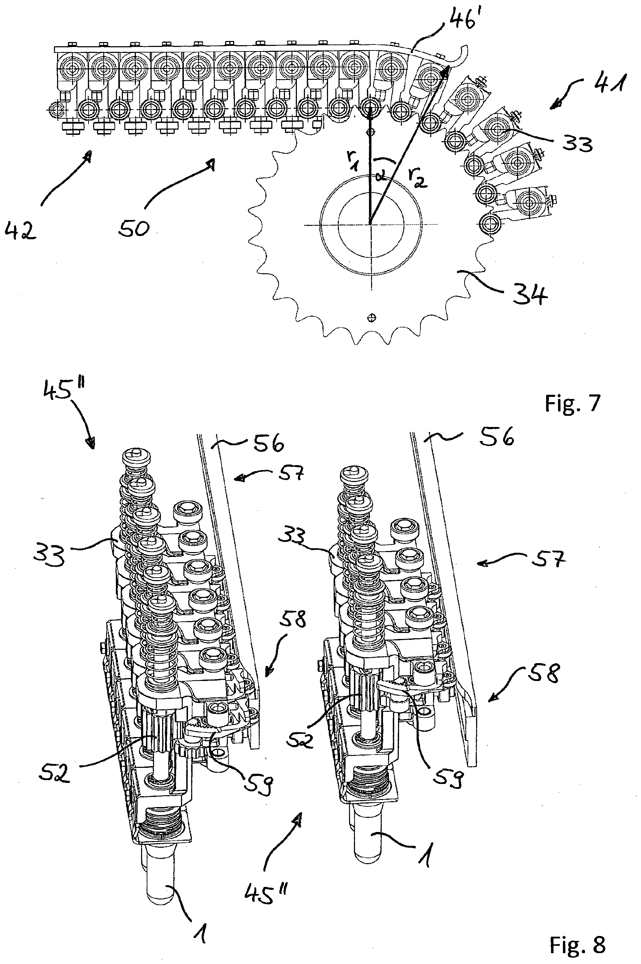

Fig. 4 zeigt weiterhin die Anordnung einer zweiten Eingriffseinrichtung (45), die im dargestellten Ausführungsbeispiel als umlaufend geführter Eingriffsriemen (46') ausgeführt ist. Der obere Umlenkbereich (49) des Eingriffsriemens (46') befindet sich zwischen den Heizkästen (30) für die gleichmäßige Temperierung der Vorformlinge (1) und denjenigen Heizkästen (30') für das Preferential Heating. Dazu ist zum Beispiel eine Einschubposition für einen Heizkasten unbesetzt. Die eine untere Umlenkrolle (48) für den Eingriffsriemen (46') ist im Bereich des Kopfrades (34) angeordnet. Insbesondere ist diese Umlenkrolle (48) so ausgebildet, das der Eingriffsriemen (46') teilweise noch dem gekrümmten Bereich (41) um das Kopfrad (34) herum folgt. Weiterhin ist diese Umlenkrolle (48) insbesondere verschieblich ausgebildet in der Weise, dass der Eingriffsriemen (46') über eine veränderliche Wegstrecke dem gekrümmten Bereich (41) des Kopfrades folgt. Einzelheiten dazu sind in Fig. 7 dargestellt und werden in Verbindung mit Fig. 7 näher erläutert werden, insbesondere die damit erzielten Vorteile.

Der Eingriffsriemen (46') weist im dargestellten Ausführungsbeispiel einen Riemenantrieb (47) auf. Der Eingriffsriemen (46') ist dabei so ausgeführt, dass ein Eingriff in die Transportmittel (33) derart erfolgt, dass beim Durchlaufen der für das Preferential Heating ausgebildeten Heizkästen (30') keine Rotation um die Längsachse der Vorformlinge erfolgt. Dazu ist zum Beispiel vorgesehen, dass der Eingriffsriemen (46') mit der gleichen Geschwindigkeit läuft wie die Transportkette (50). Es ist dazu zum Beispiel möglich, dass eine Synchronisierung zwischen der Transportkette (50) und dem Eingriffsriemen (46') erfolgt. Es wäre aber auch denkbar, dass zum Beispiel der Eingriffsriemen (46') über keinen eigenen Antrieb verfügt, sondern zum Beispiel Mitnehmer aufweist, die in die Transportkette (50) eingreifen und dann von der Transportkette (50) mitgenommen werden. Auf diese Weise kann die Geschwindigkeit der Transportkette (50) und des Eingriffsriemens (46') auf einfache Weise gleich gehalten werden.

Fig. 4 zeigt weiterhin einen sogenannten Dorndrehriemen (51), der für die gleichmäßige Rotation der Vorformlinge (1) um ihre Längsachse sorgt. Dieser Dorndrehriemen (51) ist außenseitig von der Transportkette (50) geführt, in alternativen Ausführungsvarianten könnte er auch innenseitig geführt werden, und verläuft in einem geringen Abstand in den linearen Bereichen (42) der Heizvorrichtung (H) parallel zur Transportkette (50). Dieser Dorndrehriemen (51) läuft vollständig um die Transportkette (50) herum und ist ein Beispiel für eine anspruchsgemäße erste Eingriffseinrichtung. Ein solcher Dorndrehriemen (51) ist bereits im Stand der Technik bekannt und wirkt zum Beispiel mit einem Zahnrad (52) zusammen, das an den jeweiligen Transportmitteln (33) angeordnet ist und das auf dem Dorndrehriemen (51) abrollt. Die Umlaufgeschwindigkeit des Dorndrehriemens (51) ist im Verhältnis zur Umlaufgeschwindigkeit der Transportkette (50) so gewählt, dass eine Relativgeschwindigkeit besteht, sodass das den Vorformling (1) tragende Transportmittel (33) in eine Eigenrotation aufgrund des Abrollens des Zahnrades (52) auf dem Dorndrehriemen (51) versetzt wird.

Im Bereich zwischen den Heizkästen (30) für die gleichmäßige Temperierung und den Heizkästen (30') für das Preferential Heating wird dieser Dorndrehriemen (51) weg von der Transportkette (50) geführt und der Dorndrehriemen (51) ist dadurch außer Eingriff mit den Zahnrädern (52) der Transportmittel (33). Dieses Wegführen ist vorgesehen, damit die zweite Eingriffseinrichtung (45) auf das Zahnrad (52) zugreifen kann, ohne dass der Dorndrehriemen (51) eine Störung darstellt. Dazu ist der Dorndrehriemen (51) außenseitig an der zweiten Eingriffseinrichtung (45) und an dessen Umlenk- und Führungsrollen (48, 49) herumgeführt. Außerhalb des Bereiches der Heizkästen (30') für das Preferential Heating und nachdem der Eingriffsriemen (46') für einen geschlossenen Umlauf zurückgeführt wird, verläuft der Dorndrehriemen (51) wieder näher an der Transportkette (50) und gelangt im linken linearen Bereich (42) der Heizvorrichtung (H) erneut in Eingriff mit den Zahnrädern (52) der z.B. als Transportdorne ausgebildeten Transportmittel (33).

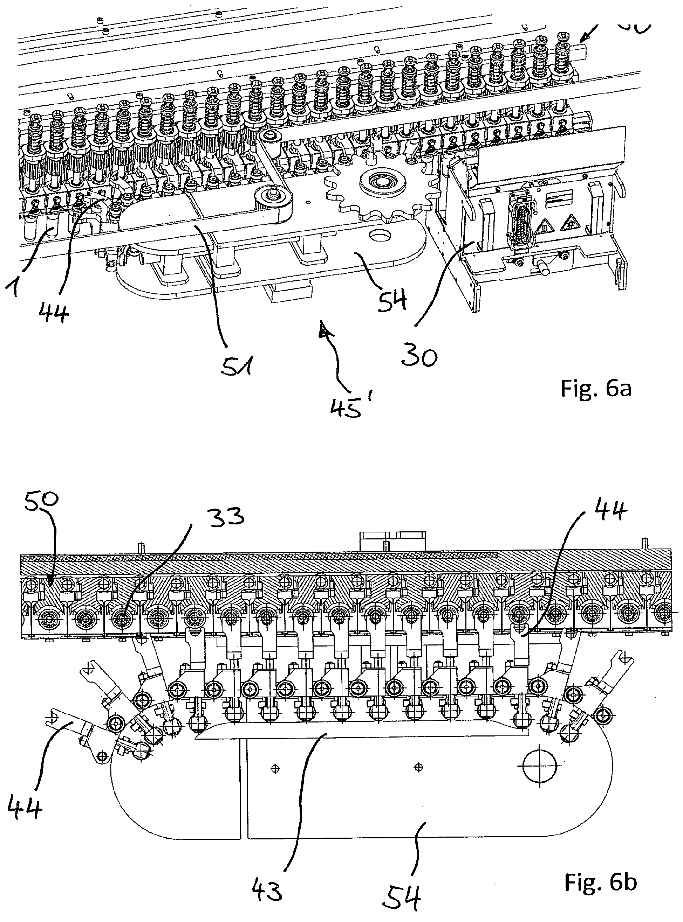

Der in Fig. 7 gezeigte vergrößerte Ausschnitt aus Fig. 4 zeigt den Eingriffsriemen (46') in seiner Erstreckung im Bereich des Kopfrades (34). Im linken, linearen Bereich befindet sich der Eingriffsriemen (46'), z.B. ein Zahnriemen, in Eingriff mit dem Zahnrad (52) der Transportdorne der Transportkette (50), wobei auch andere Transportmittel (33) als Transportdorne die Kettenglieder der Transportkette (50) bilden könnten. Dieser Eingriff wird fortgesetzt in einen gekrümmten Bereich (41) der Transportkette (50) hinein und zwar verläuft der Eingriffsriemen (46') über einen Teilumfang mit einem zugehörigen Winkel (α) in diesem gekrümmten Bereich um das Kopfrad (34) herum, bevor der Riemen (46') von den Zahnrädern (52) abhebt und seinen Rücklauf beginnt. Im linearen Bereich (42) befinden sich der Eingriffsriemen (46') und die Transportkette (50) auf gleicher Geschwindigkeit, und aufgrund der Parallelanordnung der beiden Riemen- bzw. Kettenverläufe kann auf diese Weise der Vorformling (1) in einer festen Umfangswinkelstellung gehalten werden. Sobald allerdings der gekrümmte Bereich (41) beginnt, spreizt sich die Transportkette (50) auf und der Eingriffsriemen (46') und die Transportkette (50) laufen auf unterschiedlichen Radien r₁, r₂ mit unterschiedlicher Winkelgeschwindigkeit. Aus diesem Grund erfolgt in diesem gekrümmten Bereich (41) des Kopfrades (34) eine Drehung des Transportmittels (33) und des davon gehaltenen Vorformlings (1). Der Drehwinkel ist einerseits abhängig vom Verhältnis der Umlaufradien der Transportkette (50) und des Eingriffsriemens (46') und andererseits vom Winkel (α). Durch Verschieben derjenigen Position in dem gekrümmten Bereich (41), an dem der Eingriffsriemen (46') außer Eingriff mit dem Zahnrad (52) des Transportdornes (33) gesetzt wird, kann die Drehung des Vorformlings (1) bzw. des Transportdornes (33) gezielt eingestellt werden. Zum Zwecke dieser Einstellung ist ein Umlenkmittel (48) des Eingriffsriemens (46') in diesem Bereich (41) verstellbar ausgeführt, um gezielt den in Fig. 6 gezeigten Winkel (α) zu verändern. Die gezielte Drehung des Vorformlings (1) bzw. des Transportdornes (33) ist insbesondere dann von Vorteil, wenn der Vorformling (1) in einer bestimmten Ausrichtung in die Blasstation (3) eingesetzt werden soll, wenn also die auf höherer Temperatur gehaltenen Umfangsbereiche des Vorformlings (1) zum Beispiel in einer bestimmten Relativposition zu den Blasformhälften (5, 6) stehen sollen, um eine unrunde Behälterform zu erreichen. Das Einstellen einer solchen gewünschten Ausrichtung des Vorformlings (1) wird durch das gezielte Einstellen des Winkels (α) in Fig. 7 durch Verschieben einer Umlenkrolle (48) des Eingriffsriemens (46) unterstützt.

Der in Bezug auf die Figuren 4 und 7 beschriebene Eingriffsriemen könnte z.B. auch als eine Eingriffskette ausgeführt sein. Diese Kette müsste lediglich analog zu dem Eingriffsriemen geführt werden und in den Eingriffskörper bzw. in das Zahnrad (52) eingreifen. Andere Eingriffseinrichtungen mit gleicher Funktionalität sind auch möglich.

Ein Beispiel für eine Eingriffskette, die eine deutlich komplexere Struktur im Vergleich zu der vorstehend erwähnten Eingriffskette gemäß dem Ausführungsbeispiel der Figuren 4 und 7 aufweist und die ggf. weitere Funktionalitäten bereitstellt, wird nachfolgend erläutert, wobei in weiterer Abwandlung zu dem vorstehenden Ausführungsbeispiel kein eigener Riemen-/Kettenantrieb bzw. generalisierend kein eigener Antrieb für die Eingriffseinrichtung vorgesehen ist, sondern das nachfolgende Ausführungsbeispiel sieht ein Mitnehmen der Eingriffseinrichtung durch die Förderkette vor. Auch dies ist als Möglichkeit zu betrachten, die in dem vorstehenden Ausführungsbeispiel realisiert sein kann. Umgekehrt kann in jedem der Ausführungsbeispiele statt eines Mitnehmers bzw. statt eines mitnehmenden Eingriffs in die Förderkette, ein eigener Antrieb für die Eingriffseinrichtung vorgesehen sein.

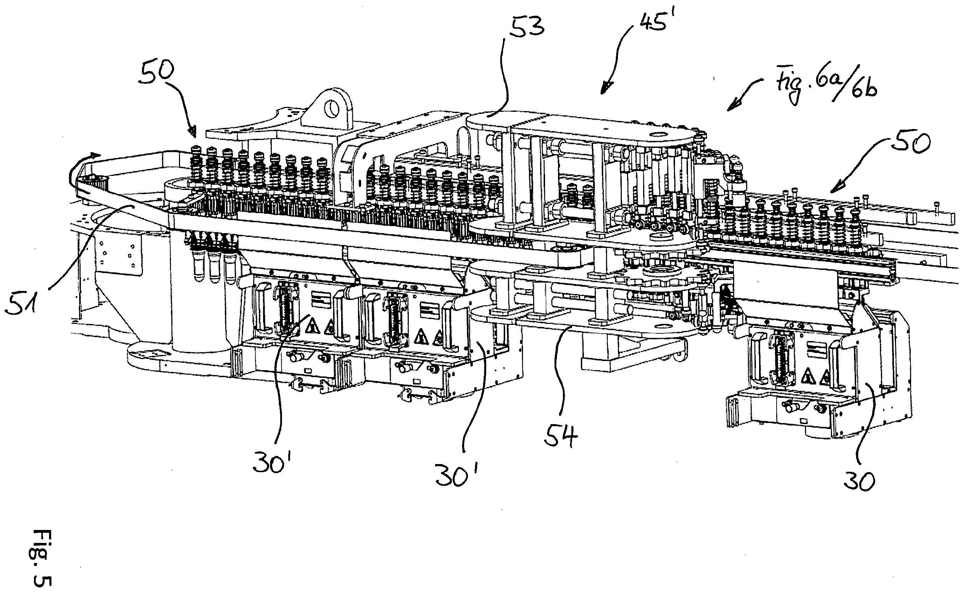

Fig. 5 zeigt in einem Teilausschnitt und in einer perspektivischen Seitendarstellung ein zweites Beispiel für eine erfindungsgemäße zweite Eingriffseinrichtung (45'). Diese zweite Eingriffseinrichtung (45') ist im Wesentlichen als eine umlaufende Kette mit mehreren Kettengliedern ausgeführt. Die erste Eingriffseinrichtung (51) ist auch hier in Form eines umlaufenden Zahnriemens ausgebildet, nämlich als Dorndrehriemen. Im vorderen rechten Bereich der Fig. 5 ist ein Heizkasten (30) dargestellt, der für die gleichmäßige Temperierung eines Vorformlings (1) in Umfangsrichtung vorgesehen ist. Im linken Bereich der Fig. 5 sind zwei Heizkästen (30') dargestellt, die für das Preferential Heating ausgebildet sind. Im dazwischenliegenden Bereich, der durch Weglassen zum Beispiel eines Heizkastens freigeblieben ist, ist die zweite Eingriffseinrichtung (45') angeordnet. Diese Eingriffseinrichtung (45') besteht aus einem oberen Bauteil (53) und einem unteren Bauteil (54). Zwischen diesen Bauteilen (53, 54) ist der Dorndrehriemen (51) weg von der Transportkette (50) geführt und verläuft außenseitig an den Heizkästen (30') entlang. Diese gewählte Zweiteilung der Eingriffseinrichtung ist rein optional und ermöglicht z.B. das Vorsehen weiterer Funktionen in diesem Bereich der Heizvorrichtung (H). Solche weiteren Funktionen können z.B. das Ausführen einer Sterilisierung durch eine Sterilisierungseinrichtung oder z.B. das Vorsehen einer Inspektionsvorrichtung sein. Bezüglich der Sterilisierungseinrichtung wird z.B. auf die DE 10 2010 026 166 A1 verweisen und hier insbesondere auf die Fig. 5 sowie auf die dortigen Ausführungen zu den Vorteilen und zu der technischen Realisierung einer Sterilisierung von Vorformlingen im Bereich der Heizstrecke einer Heizvorrichtung.

In nicht dargestellter Weise sind das obere Bauteil (53) und das untere Bauteil (54) der zweiten Eingriffseinrichtung (45') zu einer koordinierten Umlaufbewegung gekoppelt. Auch hier ist denkbar, beide Bauteile (53, 54) mit eigenen Antrieben zu versehen, die zueinander koordiniert arbeiten, um eine gleichförmige und synchronisierte Umlaufbewegung zu erreichen. Es ist aber auch denkbar, dass nur eine der beiden Baueinheiten (53, 54) über einen Antrieb verfügt und zum Beispiel die andere Baueinheit über eine Bewegungskopplung mit angetrieben wird. Es ist aber auch möglich, dass eine oder beide Baueinheiten in die Transportkette (50) eingreifen mittels Mitnehmern und von der Transportkette (50) mitgenommen werden. Beispielhaft gezeigt ist dies in den Figuren 6a und 6b. Diese Ausführungsvariante hat den Vorteil, dass automatisch die einzelnen Kettenglieder der Eingriffskette (45') mit gleicher Geschwindigkeit laufen wie die Transportkettenglieder. Bei Eingriff der Eingriffselemente (45') in das Zahnrad (52) des Transportdornes (33) und bei der gegebenen gleichen Geschwindigkeit der Eingriffseinrichtung (45') und des Transportdornes (33) führt dies dazu, dass eine Eigenrotation des Vorformlings (1) um seine Längsachse unterbunden ist. Entsprechend kann der Vorformling (1) mit einer festen Orientierung in Umfangsrichtung durch die für das Preferential Heating ausgebildeten Heizkästen (30') geführt werden. Da der Dorndrehriemen (51) im Bereich der zweiten Eingriffseinrichtung (45') außer Eingriff mit den Transportdornen (33) geführt wird, ist es ausreichend, in diesem Bereich die Dorndrehung zu beenden und anzuhalten.

Grundsätzlich könnte z.B. vorgesehen sein, dass der Mitnehmer (44) ein Eingriffselement aufweist, z.B. eine Sperrglied, das in den Drehantriebskörper (52) des Transportdorns (33) eine Drehung verhindernd eingreift, sobald der Mitnehmer (44) z.B. kurvengesteuert in mitnehmenden Eingriff mit der Transportkette (50) gebracht wird. Die Sperrglieder würden dann mit den Mitnehmern bewegt und z.B. zeitgleich in Eingriff und außer Eingriff gebracht. Dazu müsste allerdings z.B. das in Fig. 6a gezeigte Abheben des Dorndrehriemens (51) früher als dort dargestellt erfolgen. Es ist auch möglich, dass getrennt vom Mitnehmer (44), aber in analoger Weise wie zum Mitnehmer (44) gezeigt, an jedem Kettenglied ein Eingriffselement der Eingriffseinrichtung (45') angeordnet ist, das z.B. ebenfalls kurvengesteuert in Eingriff und außer Eingriff mit dem Drehantriebskörper (52) des Transportdornes (33) gebracht wird. Dies kann dann zeitlich versetzt zum Mitnehmereingriff in die Förderkette (50) erfolgen. Dies würde auch möglich machen, die Zahl der Mitnehmer (44) anders als die Zahl der Eingriffselemente zu wählen. Es besteht keine Notwendigkeit, dass jedes Kettenglied einen Mitnehmer aufweist, dies ist rein optional. Es ist lediglich erforderlich, dass eine ausreichende Anzahl an Mitnehmern über die Kettenlänge verteilt angeordnet ist, um eine kontinuierliche Mitführung zu gewährleisten. Dazu wären aber 3 oder 4 gleichmäßig verteilte Mitnehmer ausreichend.

Die Fig. 6a und 6b zeigen unter Weglassung des oberen Bauteiles, wie die im vorstehenden Absatz angesprochenen Mitnehmer (44) in einer speziellen Ausführungsform ausgebildet sein könnten. Die untere Ketteneinheit (54) weist in radialer Richtung verschiebliche Mitnehmer (44) auf, die z.B. federgespannt in einer radial nach innen gezogenen Positionierung gehalten sind. Bei Erreichen einer externen Steuerkurve (43) werden die Mitnehmer (44) radial nach außen gedrückt und gelangen in Schleppeingriff mit den Transportmittel (33) der Transportkette. Eine solche Lösung wird als vorteilhaft betrachtet, da die Mitnehmer (44) nicht einfach in die linear bewegte Transportkette (50) einschwenken können. Der Eingriff der Mitnehmer (44) kann z.B. nur im linearen Umlaufbereich (42) erfolgen.

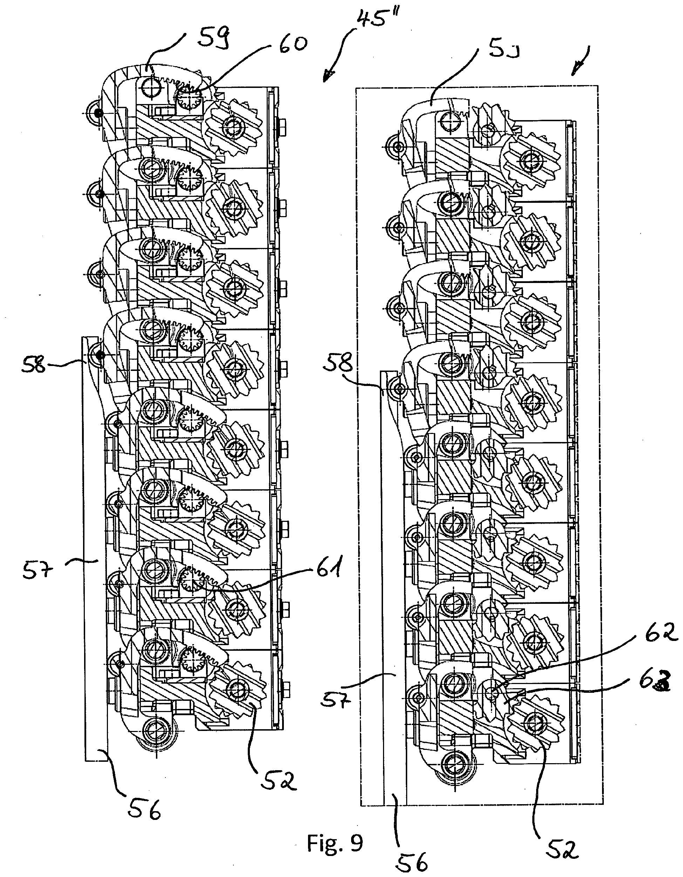

Fig. 8 zeigt eine weitere Konkretisierung einer zweiten Eingriffseinrichtung (45"). Diese Eingriffseinrichtung (45") besteht aus mehreren Eingriffselementen (63), die durch eine externe Steuerkurve (56) kurvengesteuert ausgebildet sind. In einem ersten Bereich (57) dieser Steuerkurve (56) befinden sich die Eingriffselemente (63) außer Eingriff mit dem Zahnrad (52) des Transportdornes (33). In einem zweiten Bereich (58) der Steuerkurve (56) wird ein Schwenkhebel (59) betätigt, der über eine Innenverzahnung (60) verfügt und der ein Zahnritzel (61) antreibt. Details hierzu sind in den Figuren 9 besser zu erkennen. Insbesondere ist dort zu erkennen, dass dieses Ritzel (61) auf einer gemeinsamen Welle (62) mit einen Riemenscheibensegment (63) sitzt. Die Schwenkbewegung des Schwenkhebels (59) führt zu einer Drehung des Ritzels (61). Die Drehung des Ritzels (61) wird von dem Riemenscheibensegment (63) mitvollzogen. Im ersten Bereich (57) der Steuerkurve (56) befindet sich dieses Riemenscheibensegment (63) außer Eingriff mit dem Zahnrad (52) des Transportdornes (33). Im zweiten Bereich (58) der Steuerkurve (56) schwenkt der Schwenkhebel (59), dreht dadurch das Ritzel (61) und dadurch gelangt das Riemenscheibensegment (63) in Eingriff mit dem Zahnrad (52) des Transportdornes (33). Beibehaltung dieser Position führt dazu, dass das Zahnrad (52) festgehalten ist und der Transportdorn (33) und der davon gehaltene Vorformling (1) drehfest gehalten sind.

Diese Konstruktion erlaubt es weiterhin, den Transportdorn (33) und den davon gehaltenen Vorformling (1) nicht nur drehfest zu halten, sondern gezielt um einen bestimmten Drehwinkel zu verdrehen, nämlich dann, wenn die Schwenkbewegung des Schwenkhebels (59) so ausgeführt wird, dass das Riemenscheibensegment (63) nicht nur das Zahnrad (52) in einer bestimmten Position festhält, sondern der Schwenkhebel (59) könnte zum Beispiel in einem dritten Bereich der Steuerkurve (56) stärker verschwenkt werden, dadurch das Ritzel (61) noch weiter drehen und dadurch das Riemenscheibensegment (63) noch weiter drehen, sodass in Folge des kämmenden Eingriffs mit dem Zahnrad (52) des Transportdornes (33) dieses Zahnrad (52) und somit auch der Transportdorn (33) um einen bestimmten Winkel verdreht wird.

## Patentansprüche

1. Heizvorrichtung (H) zur thermischen Konditionierung von aus einem thermoplastischen Material bestehenden Vorformlingen (1) auf ein für eine Blasformung geeignetes Temperaturprofil, wobei die Heizvorrichtung (H) mehrere entlang einer Heizstrecke (24) hintereinander angeordnete Heizeinrichtungen (30, 30') aufweist, mit Transportmitteln (33) zum Transport der Vorformlinge (1) auf einem Transportweg (55) entlang der Heizstrecke (24) und entlang der Heizeinrichtungen (30, 30'), wobei die Transportmittel (33) kettenartig zu einer geschlossen umlaufenden Transportkette (50) verbunden sind, wobei die Transportmittel (33) einen Drehantriebskörper (52)) aufweisen, der mit einer beabstandet zur Transportkette (50) umlaufend angeordneten und angetriebenen ersten Eingriffseinrichtung (51) zusammenwirkt zur Einbringung einer Eigenrotationsbewegung um eine Längsachse des Transportmittels (33) durch Eingriff in den Drehantriebskörper (52), wobei die Heizvorrichtung (H) einen ersten Heizabschnitt mit ersten Heizeinrichtungen (30) aufweist zur gleichmäßigen Temperierung der Vorformlinge (1) in deren Umfangsrichtung und einen zweiten Heizabschnitt mit zweiten Heizeinrichtungen (30') zur ungleichmäßigen Temperierung der Vorformlinge (1) in deren Umfangsrichtung (Preferential Heating), wobei die erste Eingriffseinrichtung (51) so angeordnet ist, dass sie im Bereich des ersten Heizabschnittes in Eingriff mit dem Drehantriebskörper (52) ist und im Bereich des zweiten Abschnittes außer Eingriff mit dem Drehantriebskörper (52) ist, **dadurch gekennzeichnet, dass** die Heizvorrichtung (H) eine zweite, beabstandet zur Transportkette (50) umlaufend angeordnete und antreibbare Eingriffseinrichtung (45, 45', 45") aufweist, die so angeordnet ist, dass sie im Bereich des zweiten Heizabschnittes in Eingriff mit dem Drehantriebskörper (52) ist und dabei die Umlaufgeschwindigkeit der Transportkette (50) aufweist.

2. Heizvorrichtung (H) nach Anspruch 1, **dadurch gekennzeichnet, dass** die zweite Eingriffseinrichtung (45') wenigstens ein Koppelelement (44) aufweist, das zur Bewegungskopplung in koppelnden Eingriff mit den Transportmitteln (33) verfahrbar ist, insbesondere kurvengesteuert verfahrbar ist.

3. Heizvorrichtung (H) nach Anspruch 1 oder 2, **dadurch gekennzeichnet, dass** die Transportmittel (33) als Transportdorne ausgebildet sind, insbesondere als in den Mündungsabschnitt (21) der Vorformlinge (1) einführbare Klemmdorne.

4. Heizvorrichtung (H) nach einem der vorhergehenden Ansprüche, **dadurch gekennzeichnet, dass** der Drehantriebskörper (52) als Zahnrad ausgebildet ist und die erste Eingriffseinrichtung (51) als Zahnriemen.

5. Heizvorrichtung (H) nach einem der vorhergehenden Ansprüche, **dadurch gekennzeichnet, dass** die Transportkette (50) mittels voneinander beabstandet angeordneter Umlenkräder (36, 34) geführt ist zur Bildung gekrümmter Umlaufabschnitte (41) im Bereich der Umlenkräder (34) und linearer Umlaufabschnitte (42) in den dazwischenliegenden Bereichen, wobei die Heizeinrichtungen (30, 30') in den linearen Umlaufabschnitten (42) angeordnet sind.

6. Heizvorrichtung (H) nach einem der vorhergehenden Ansprüche, **dadurch gekennzeichnet, dass** die zweite Eingriffseinrichtung (45) als Zahnriemen (46') ausgebildet ist und insbesondere in einem linearen Umlaufabschnitt (42) angeordnet ist.

7. Heizvorrichtung (H) nach Anspruch 6, **dadurch gekennzeichnet, dass** der die zweite Eingriffseinrichtung (45) ausbildende Zahnriemen (46') über einen Teilumfang entlang eines Umlenkrades (34) der Transportkette (50) und dabei in Eingriff mit dem Drehantriebskörper (52) stehend von einem Führelement (48) geführt ist.

8. Heizvorrichtung (H) nach Anspruch 7, **dadurch gekennzeichnet, dass** das Führelement (48) verschieblich ausgeführt ist.

9. Heizvorrichtung (H) nach einem der vorhergehenden Ansprüche, **dadurch gekennzeichnet, dass** der Eingriff der zweiten Eingriffseinrichtung (45', 45") kurvengesteuert ausgeführt ist.

10. Heizvorrichtung (H) nach Anspruch 4, **dadurch gekennzeichnet, dass** die zweite Eingriffseinrichtung (45) als eine umlaufende Eingriffskette (46) ausgeführt ist mit mehreren aneinandergereihten Kettengliedern, wobei jedes Kettenglied einen mit einem Drehantriebskörper (52) in eine Eingriffsposition verfahrbaren, insbesondere kurvengesteuert verfahrbaren Eingriffskörper (63) aufweist und/oder ein Koppelelement (44) nach Anspruch 2 aufweist.

11. Heizvorrichtung (H) nach Anspruch 10, **dadurch gekennzeichnet, dass** die Eingriffskette (46) aus zwei in vertikaler Richtung zueinander beabstandet angeordneten Ketteneinheiten (53, 54) besteht, die bewegungsgekoppelt ausgeführt sind und zwischen denen das erste Eingriffselement (51) weg von der Transportkette (50) geführt ist

12. Heizvorrichtung (H) nach Anspruch 10 oder 11, **dadurch gekennzeichnet, dass** der Eingriffskörper als verfahrbarer Schwenkhebel (59) mit Innenverzahnung (60) ausgebildet ist, wobei dieser Schwenkhebel (59) insbesondere eine mit dem Drehantriebskörper (52) kämmende Riemenscheibe (63) antreibend ausgeführt ist, wobei die Riemenscheibe (63) insbesondere als Scheibensegment ausgeführt ist, wobei der Antrieb der Riemenscheibe (63) insbesondere über ein von dem Schwenkhebel (59) angetriebenes Ritzel (61) erfolgt, das insbesondere auf einer gemeinsamen Welle (62) mit der Riemenscheibe (63) angeordnet ist.

13. Blasmaschine, insbesondere Streck-Blasmaschine, mit einer Heizvorrichtung (H) nach einem der vorhergehenden Ansprüche.

14. Verfahren zur thermischen Konditionierung von aus einem thermoplastischen Material bestehenden Vorformlingen (1) auf ein für eine Blasformung geeignetes Temperaturprofil, wobei die Temperierung in einer Heizvorrichtung (H) erfolgt, die mehrere entlang einer Heizstrecke (24) hintereinander angeordnete Heizeinrichtungen (30, 30') aufweist, wobei Transportmittel (33) die Vorformlinge (1) auf einem Transportweg (55) entlang der Heizstrecke (24) und entlang der Heizeinrichtungen (30, 30') führen, wobei die Transportmittel (33) kettenartig zu einer geschlossen umlaufenden Transportkette (50) verbunden sind, wobei in einem ersten Heizabschnitt der Heizvorrichtung (H) eine gleichmäßige Temperierung der Vorformlinge (1) in deren Umfangsrichtung erfolgt unter Drehung der Vorformlinge (1) um deren Längsachse und wobei in einem zweiten Heizabschnitt der Heizvorrichtung (H) eine ungleichmäßige Temperierung der Vorformlinge (1) in deren Umfangsrichtung erfolgt (Preferential Heating), wobei an den Transportmitteln (33) ein Drehantriebskörper (52) angeordnet wird, an den eine beabstandet zur Transportkette (50) umlaufend angeordnete und angetriebene erste Eingriffseinrichtung (51) angreift zur Einbringung einer Eigenrotationsbewegung um eine Längsachse des Transportmittels (33), wobei diese erste Eingriffseinrichtung (51) im Bereich des ersten Heizabschnittes in Eingriff mit dem Drehantriebskörper (52) gebracht wird und im Bereich des zweiten Heizabschnittes außer Eingriff mit dem Drehantriebskörper (52) gebracht wird, **dadurch gekennzeichnet, dass** eine zweite Eingriffseinrichtung (45, 45', 45") beabstandet zur Transportkette (50) antreibbar umlaufend angeordnet wird, die im Bereich des zweiten Heizabschnittes in Eingriff mit dem Drehantriebskörper (52) gebracht wird und den Drehantriebskörper (52) drehfest hält, insbesondere indem sie auf eine gleiche Umlaufgeschwindigkeit wie die Transportkette (50) gehalten wird.

15. Verfahren nach Anspruch 14, **dadurch gekennzeichnet, dass** die zweite Eingriffseinrichtung (45) nach einem Halten des Drehantriebskörpers (52) und vor der Aufhebung des Eingriffs in den Drehantriebskörper (52) den Vorformling (1) um einen vorgegebenen Winkel um dessen Längsachse dreht, wobei dieser Winkel insbesondere einstellbar ist.

## Claims

1. A heating device (H) for thermally conditioning preforms (1) made of a thermoplastic material to a temperature profile, which is suitable for a blow moulding, wherein the heating device (H) has several heating means (30, 30') arranged one behind the other along a heating section (24), comprising transport means (33) for transporting the preforms (1) on a transport path (55) along the heating section (24) and along the heating means (30, 30'), wherein the transport means (33) are connected in a chain-like manner to form a closed revolving transport chain (50), wherein the transport means (33) have a rotary drive body (52), which cooperates with a first engaging means (51), which is arranged and driven so as to revolve spaced apart from the transport chain (50), for introducing an intrinsic rotational movement around a longitudinal axis of the transport means (33) by engaging with the rotational drive body (52), wherein the heating device (H) has a first heating section comprising first heating means (30) for uniformly controlling the temperature of the preforms (1) in the circumferential direction thereof, and a second heating section comprising second heating means (30') for unevenly controlling the temperature of the preforms (1) in the circumferential direction thereof (Preferential Heating), wherein the first engaging means (51) is arranged in such a way that it engages with the rotary drive body (52) in the region of the first heating section, and does not engaged with the rotary drive body (52) in the region of the second section, **characterised in that** the heating device (H) has a second engaging means (45, 45', 45"), which is arranged and can be driven so as to revolve spaced apart from the transport chain (50) in such a way that it engages with the rotary drive body (52) in the region of the second heating section and thereby has the circumferential speed of the transport chain (50).

2. The heating device (H) according to Claim 1, **characterised in that** the second engaging means (45') has at least one coupling element (44), which can be displaced in coupling engagement with the transport means (33), in particular can be displaced in a cam-controlled manner, for the coupling of movements.

3. The heating device (H) according to Claim 1 or 2, **characterised in that** the transport means (33) are formed as transport mandrels, in particular as clamping mandrels, which can be inserted into the mouth section (21) of the preforms (1).

4. The heating device (H) according to any one of the preceding claims, **characterised in that** the rotary drive body (52) is formed as gear wheel and the first engaging means (51) is formed as toothed belt.

5. The heating device (H) according to any one of the preceding claims, **characterised in that** the transport chain (50) is guided by means of deflecting wheels (36, 34), which are arranged spaced apart from one another, for forming curved rotational sections (41) in the region of the deflecting wheels (34), and linear circumferential sections (42) in the regions located therebetween, wherein the heating means (30, 30') are arranged in the liner circumferential sections (42).

6. The heating device (H) according to any one of the preceding claims, **characterised in that** the second engaging means (45) is formed as toothed belt (46') and is in particular arranged in a linear circumferential section (42).

7. The heating device (H) according to Claim 6, **characterised in that** the toothed belt (46'), which forms the second engaging means (45), is guided by a guide element (48) over a partial circumference along a deflecting wheel (34) of the transport chain (50) and thereby engaging with the rotary drive body (52).

8. The heating device (H) according to Claim 7, **characterised in that** the guide element (48) is embodied in a displaceable manner.

9. The heating device (H) according to any one of the preceding claims, **characterised in that** the engagement of the second engaging means (45', 45") is embodied in a cam-controlled manner.

10. The heating device (H) according to Claim 4, **characterised in that** the second engaging means (45) is embodied as a revolving engaging chain (46) comprising several chain links arranged in a row, wherein each chain link has an engaging body (63), which can be displaced, in particular displaced in a cam-controlled manner, into an engagement position by means of a rotary drive body (52), and/or a coupling element (44) according to claim 2.

11. The heating device (H) according to Claim 10, **characterised in that** the engaging chain (46) consists of two chain units (53, 54), which are arranged spaced apart from one another in the vertical direction and which are embodied to be coupled in movement and between which the first engaging element (51) is guided away from the transport chain (50).

12. The heating device (H) according to Claim 10 or 11, **characterised in that** the engaging body is formed as displaceable pivot lever (59) comprising internal toothing (60), wherein this pivot lever (59) is embodied to in particular drive a belt pulley (63), which meshes with the rotary drive body (52), wherein the belt pulley (63) is in particular embodied as disk segment, wherein the drive of the belt pulley (63) takes place in particular via a pinion (61), which is driven by the pivot lever (59) and which is in particular arranged on a common shaft (62) with the belt pulley (63).

13. A blow moulding machine, in particular a stretch blow moulding machine, comprising a heating device (H) according to any one of the preceding claims.

14. A method for thermally conditioning preforms (1) made of a thermoplastic material to a temperature profile, which is suitable for a blow moulding, wherein the temperature control takes place in a heating device (H), which has several heating means (30, 30') arranged one behind the other along a heating section (24), wherein transport means (33) guide the preforms (1) on a transport path (55) along the heating section (24) and along the heating means (30, 30'), wherein the transport means (33) are connected in a chain-like manner to form a closed revolving transport chain (50), wherein a uniform temperature control of the preforms (1) in the circumferential direction thereof takes place in a first heating section of the heating device (H) by rotating the preforms (1) around the longitudinal axis thereof, and wherein an uneven temperature control of the preforms (1) in the circumferential direction thereof (Preferential Heating) takes place in a second heating section of the heating device (H), wherein at the transport means (33) there is arranged a rotary drive body (52), with which an engaging means (51) engages, which is arranged and driven so as to revolve spaced apart from the transport chain (50), for introducing an intrinsic rotational movement around a longitudinal axis of the transport means (33), wherein this first engaging means (51) is engaged with the rotary drive body (52) in the region of the first heating section, and is disengaged from the rotary drive body (52) in the region of the second section, **characterised in that** a second engaging means (45, 45', 45") is arranged to be capable of being driven so as to revolve spaced apart from the transport chain (50), which is engaged with the rotary drive body (52) in the region of the second heating section and holds the rotary drive body (52) in a rotationally fixed manner, **in that** it is maintained at the same circumferential speed as the transport chain (50).

15. The method according to Claim 14, **characterised in that** the second engaging means (45) rotates the preform (1) around the longitudinal axis thereof by a predetermined angle after holding the rotary drive body (52) and prior to eliminating the engagement with the rotary drive body (52), whereby this angle can in particular be set.

## Revendications

1. Dispositif de chauffage (H) pour le conditionnement thermique de préformes (1) en un matériau thermoplastique de sorte à obtenir un profil de températures approprié au moulage par soufflage, le dispositif de chauffage (H) présentant plusieurs dispositifs de chauffage (30, 30') agencés l'un derrière l'autre le long d'une section de chauffage (24), avec des moyens de transport (33) pour le transport des préformes (1) selon un parcours (55) le long d'une section de chauffage (24) et le long des dispositifs de chauffage (30, 30'), les moyens de transport (33) étant reliés à l'instar des maillons d'une chaîne pour former une chaîne de transport (50) fermée en rotation, les moyens de transport (33) présentant un corps d'entraînement en rotation (52) qui agit conjointement avec un premier dispositif d'engagement (51) agencé et entraîné de façon à circuler à une certaine distance de la chaîne de transport (50) pour réaliser, par engagement dans le corps d'entraînement en rotation (52), un mouvement de rotation propre autour d'un axe longitudinal du moyen de transport (33), le dispositif de chauffage (H) présentant une première section de chauffage avec une première série de dispositifs de chauffage (30) pour un équilibrage thermique périphérique uniforme des préformes (1) et une seconde section de chauffage avec une seconde série de dispositifs de chauffage (30') pour un équilibrage thermique périphérique préférentiel des préformes (1) (Preferential Heating), le premier dispositif d'engagement (51) étant agencé de façon à s'engager avec le corps d'entraînement en rotation (52) dans la première section de chauffage et à s'en désengager dans la seconde section, **caractérisé en ce que** le dispositif de chauffage (H) présente un second dispositif d'engagement (45, 45', 45") agencé et entraînable de façon à circuler à une certaine distance de la chaîne de transport (50), son agencement étant tel qu'il s'engage avec le corps d'entraînement dans la seconde section de chauffage et, ce faisant, présente la vitesse de rotation de la chaîne de transport (50).

2. Dispositif de chauffage (H) selon la revendication 1, **caractérisé en ce que** le second dispositif d'engagement (45') présente au moins un élément de couplage (44) déplaçable de façon à s'engager dans les moyens de transport (33) et obtenir un couplage cinématique, ce déplacement étant notamment commandé par came.

3. Dispositif de chauffage (H) selon la revendication 1 ou 2, **caractérisé en ce que** les moyens de transport (33) sont réalisés sous forme de mandrins de transport, notamment sous forme de mandrins expansibles pouvant être introduits dans la section d'embouchure (21) des préformes (1).

4. Dispositif de chauffage (H) selon l'une des revendications précédentes, **caractérisé en ce que** le corps d'entraînement en rotation (52) est réalisé sous forme de roue dentée et le premier dispositif d'engagement (51) sous forme de courroie dentée.

5. Dispositif de chauffage (H) selon l'une des revendications précédentes, **caractérisé en ce que** la chaîne de transport (50) est guidée par des roues de renvoi (36, 34) agencées à une certaine distance l'une de l'autre pour former des sections de circulation incurvées (41) au niveau des roues de renvoi (34) et des sections de circulation linéaires (42) dans les zones intermédiaires, les dispositifs de chauffage (30, 30') étant agencés dans les sections de circulation linéaires (42).

6. Dispositif de chauffage (H) selon l'une des revendications précédentes, **caractérisé en ce que** le second dispositif d'engagement (45) est réalisé sous forme de courroie dentée (46') et est notamment agencé dans une section de circulation linéaire (42).

7. Dispositif de chauffage (H) selon la revendication 6, **caractérisé en ce que** la courroie dentée (46') formant le second dispositif d'engagement (45) est guidée par un élément de guidage (48) sur une partie de la circonférence le long d'une roue de renvoi (34) de la chaîne de transport (50) tout en étant engrené avec le corps d'entraînement en rotation (52).

8. Dispositif de chauffage (H) selon la revendication 7, **caractérisé en ce que** l'élément de guidage (48) est réalisé de façon à pouvoir être déplacé.

9. Dispositif de chauffage (H) selon l'une des revendications précédentes, **caractérisé en ce que** l'engagement du second dispositif d'engagement (45', 45") est commandé par came.

10. Dispositif de chauffage (H) selon la revendication 4, **caractérisé en ce que** le second dispositif d'engagement (45) est réalisé sous forme de chaîne circulante (46) avec plusieurs chaînons contigu, chaque chaînon présentant un corps d'engagement (63) déplaçable, notamment par une commande à came, en une position d'engagement avec le corps d'entraînement en rotation (52), et/ou un élément de couplage (44) selon la revendication 2.

11. Dispositif de chauffage (H) selon la revendication 10, **caractérisé en ce que** la chaîne d'engagement (46) est constituée de deux unités de chaîne (53, 54) agencées verticalement, en couplage cinématique, à une certaine distance l'une de l'autre et entre lesquelles le premier élément d'engagement (51) est guidé à l'écart de la chaîne de transport (50).

12. Dispositif de chauffage (H) selon la revendication 10 ou 11, **caractérisé en ce que** le corps d'engagement est réalisé sous forme de levier pivotant (59) déplaçable doté d'un engrenage intérieur (60), ce levier pivotant (59) entraînant notamment une poulie (63) à courroie engrenée avec le corps d'entraînement en rotation (52), la poulie à courroie (63) étant notamment réalisée sous forme de segment de disque, l'entraînement de la poulie à courroie (63) ayant notamment lieu par un pignon (61) entraîné par le levier pivotant (59), lequel pignon est notamment agencé sur un arbre (62) commun avec la poulie à courroie (63).

13. Machine de soufflage, notamment une machine de soufflage et d'étirage avec un dispositif de chauffage (H) selon l'une des revendications précédentes.

14. Procédé de conditionnement thermique de préformes (1) en un matériau thermoplastique en vue d'obtenir un profil de températures approprié au moulage par soufflage, l'équilibrage thermique ayant lieu dans un dispositif de chauffage (H) présentant plusieurs dispositifs de chauffage (30, 30') agencés l'un derrière l'autre le long d'une section de chauffage (24), des moyens de transport (33) transportant les préformes (1) selon un parcours (55) le long d'une section de chauffage (24) et le long des dispositifs de chauffage (30, 30'), les moyens de transport (33) étant reliés à l'instar des maillons d'une chaîne pour former une chaîne de transport (50) fermée en rotation, un équilibrage thermique périphérique uniforme des préformes (1) étant obtenu dans une première section de chauffage du dispositif de chauffage (H) par rotation des préformes (1) autour de leur axe longitudinal, un équilibrage thermique périphérique préférentiel des préformes (1) (Preferential Heating) étant obtenu dans une seconde section de chauffage du dispositif de chauffage (H), les moyens de transport (33) étant dotés d'un corps d'entraînement en rotation (52) dans lequel s'engage un premier dispositif d'engagement (51) agencé et entraîné de façon à circuler à une certaine distance de la chaîne de transport (50) pour obtenir un mouvement de rotation propre du moyen de transport (33) autour d'un axe longitudinal, ce premier dispositif d'engagement (51) étant mis en prise avec le corps d'entraînement en rotation (52) au niveau de la première section de chauffage et s'en désengageant au niveau de la seconde section de chauffage, **caractérisé en ce qu'un** second dispositif d'engagement (45, 45', 45") est agencé et entraînable de façon à circuler à une certaine distance de la chaîne de transport (50), lequel dispositif est mis en prise, dans la seconde section de chauffage, avec le corps d'entraînement (52) de façon à le maintenir sans rotation, notamment en maintenant le dispositif en rotation à la même vitesse de rotation que la chaîne de transport (50).

15. Procédé selon la revendication 14, **caractérisé en ce que,** après un arrêt du corps d'entraînement en rotation (52) et avant le désengagement du corps d'entraînement en rotation (52), le second dispositif d'engagement (45) pivote la préforme (1) d'un angle prédéfini autour de son axe longitudinal, cet angle étant notamment réglable.
